# EUROPEAN PATENT APPLICATION

(11) **EP 4 269 286 A1**
(43) Date of publication of application: **01.11.2023**
(21) Application number: 23171191.2
(22) Date of filing: 02.05.2023
(51) Int. Cl.: B65G 13/02, B65G 13/06, B65G 23/08, B65G 39/02, B65G 43/10

(54) **LOW VOLTAGE SYSTEM FOR HANDLING PACKAGES WTH MOTORIZED ROLLER CONVEYORS**

(30) Priority: 29.04.2022 IT 202200008720
(71) Applicant: H100 S.r.l., 42019 Scandiano (RE) (IT)
(72) Inventor: RAVASIO, Alessio, Scandiano (RE) (IT); MARZOLA, Renato, Scandiano (RE) (IT)
(74) Representative: Silva, Valentina

(57) **Abstract**

System 500, for handling packages 200, comprising one or more motorized roller conveyors 100, a switchgear for powering said conveyor 100, a PLC control unit for management and control and a management/power module 400, characterized in that said roller conveyor 100 comprises a plurality of rollers 110 including at least one driving roller 111 comprising a movable body 120 configured to move said packages 200 rotating about its axis of symmetry Y by a handling means 160 contained within said movable body 120 wherein said handling means 160 comprise a direct current motor assembly 161 preferably of brushless type electrically powered at 48Volts by said management/power module 400, placed near the conveyor 100, and further configured to manage/power a plurality of input and output signals connected to said motor assembly 161 by means of a single communication line (field bus) constituting the means for distributing and collecting information.

## Description

### FIELD OF APPLICATION OF THE INVENTION

The present invention is in the field of conveyors, in particular roller conveyors, for handling/transporting containers, pallets and the like, or bulk material, which we more generally call packages.

The invention further relates to a system for handling and management and control of said handling of a conveyor or a plurality of conveyors.

### BACKGROUND

Various types of motorized roller conveyors comprising a plurality of rollers are known in the state of the art. This type of conveyor is used for various purposes in logistics applications.

Each roller, rotating around its own axis of symmetry, exerts a driving action on the packages to be handled.

Said rollers comprise a body extending along a longitudinal axis and has a first end and a second end opposite said first end.

Said body comprises a movable body configured to rotate around its axis of symmetry and configured to make contact with the package to be moved, and an inner body which is generally fixed and connected to support means.

In fact, said rollers are generally installed between two support means, for example two sides which are mechanically connected at each end of said rollers.

Generally, one of said rollers is configured to receive motion from handling means comprising a motor or gear motor, for example.

In particular, said handling means transmit to said roller, which we will call driving roller, a power which is expressed both in rotation speed and in the torque required to move the packages.

Mechanically connected to said driving roller are the remaining rollers, which we will call driven rollers, by transmission means such as belts or chains.

The transmission of motion from the driving roller to the driven rollers can be obtained in various manners, known to a person skilled in the art.

For example, chain-type transmissions can be provided in which transmission rings engage one roller to the one immediately preceding or following it. Said transmission rings can be chains or belts; consequently, one end of the roller will provide a pinion, a pulley or a groove with which said ring cooperates.

Alternatively, tangential transmissions can be provided in which a single transmission element engages with the driving roller and all the remaining driven rollers of the conveyor.

Two different forms of handling means are generally known.

A first embodiment provides that the motor or gear motor is installed on the support means and connected to the driving roller by means of a transmission member such as a pinion and chain or a pulley and belt, which cooperates with a respective pinion or pulley present on the movable body of the driving roller.

A second embodiment provides that the motor or gear motor is installed within the movable body of the driving roller.

The handling means are therefore fully integrated in the driving roller.

The motor or gear motor comprises a fixed part integral with the fixed body of the driving roller and a rotating part integral with the movable body of the driving roller to which it transmits rotation and torque.

Said type of driving roller will be referred to as a motorized roller hereafter.

The advantage of this solution is that it provides a roller conveyor without external motors and is therefore more hygienic and less bulky.

Motorized rollers are known in the state of the art in which the integrated handling means are powered at low voltage, 24/48 volts; these motorized rollers are generally provided with a small-diameter movable body, and typically have a power output less than 100 W, typically in the range between 10 and 40 W. Such roller conveyors are used to transport and convey light packages in roller conveyor lines.

Generally, when the packages to be transported have a significant weight, such as pallets of products exceeding 900 kg, the motorized rollers are usually provided with a movable body with a larger diameter of around 90 mm and comprise integrated handling means powered by high voltage, e.g., 380/400 Volts.

In fact, it is not easy to supply low-voltage power to conveyors which must develop high power so as to handle heavy packages.

The low-voltage supply is particularly advantageous as it allows to reduce the safety risks arising from the presence of high voltage.

Furthermore, when the packages to be transported are heavy, the motorized rollers generally have a traditional electrical management system in which each motor is connected to the switchgear and a respective inverter located in the switchgear.

This involves complex wiring, which is detrimental to the hygiene requirements which are increasingly requested in transport facilities.

In fact, to power the motor electrically, an electrical connection is provided which for each motor comprises at least one power cable from the motor to the switchgear as well as signal cables for managing the information between the motor and a PLC control unit.

Furthermore, one or more cables are always present to supply power from the switchgear to the detection means present in the conveyor.

The detection means present in the conveyor such as photocells, sensors, encoders, depending on what they detect, provide a signal for conveyor management and therefore for the management of the package handling. Said signal is transmitted to the PLC control unit by a further cable connecting between the detection means and said PLC control unit.

All this is at the expense of ease of installation and wiring and does not allow for easy maintenance and cleaning solutions.

### EXPOSURE AND ADVANTAGES OF THE INVENTION

The technical problem underlying the present invention is to provide a system, for handling packages, comprising one or more motorized roller conveyors, structurally and functionally designed to overcome one or more of the limitations set out above with reference to the prior art.

In the context of the aforesaid problem, one of the main objects of the invention is to develop a system, for handling packages, comprising one or more motorized roller conveyors, which enables handling high weight packages, such as pallets, with a system which improves safety of use and simplifies handling.

A further object of the invention is also to make available to the technology a system for handling packages comprising one or more motorized roller conveyors as part of a simple, hygienic and rational solution.

In particular, the invention provides a system for handling packages, comprising one or more motorized roller conveyors, a switchgear for powering said conveyor, a control unit for management and control, and a management/power module.

Preferably said roller conveyor comprises a plurality of rollers of which at least one driving roller.

Said driving roller preferably comprising a movable body configured to move said packages by rotating about its axis of symmetry by handling means contained within said movable body.

In particular, such handling means comprise a direct current motor assembly, preferably of the brushless type, which is electrically powered at 48 Volts by said management/power module.

Preferably said management/power module is located near the conveyor and further configured to manage/power a plurality of input and output signals connected to said motor assembly.

Preferably, this occurs by means of a single communication line (field bus) constituting the means for distributing and collecting information.

Preferably the motor assembly is configured to develop a torque capable of handling a package weighing at least 900 kg and preferably between 900 and 2000 kg.

Preferably the motor assembly is configured to develop a power greater than 200 watts, preferably between 200 and 400 watts.

In particular, the management/power module is configured to manage a plurality of driving rollers, preferably two driving rollers.

Optionally, the management/power module is configured to manage the frequency converters of a plurality of driving rollers, preferably two driving rollers, in which said frequency converters are preferably positioned in the system's switchgear.

Optionally, the management/power module is configured to manage the frequency converters which are physically integrated in the same management/power module.

Preferably the management/power module is configured to manage a plurality of input and output signals, preferably four, connected to each motor assembly.

The management/power module is preferably further configured to manage input and output signals adapted to detect the position and/or speed of the package being handled.

In particular, the management/power module of one or more conveyors is electrically connected to the management/power module of other conveyors.

In particular, the communication line (field bus) of the management/power module is of the profinet/io ethernet/ip ethercat type to interface with the PLC control unit.

According to an aspect of the invention, the management/power module is installable on the roller conveyor and preferably positioned on support means e.g., pairs of sides of said roller conveyor.

Optionally, the motor assembly comprises a gearbox, preferably planetary.

Preferably the driving roller has a diameter between 80 and 120 mm, preferably 89 mm.

These and other objects are reached by the characteristics of the invention set forth in the independent claims. The dependent claims outline preferred and/or particularly advantageous aspects of the invention.

Said objects and advantages are all achieved by the system for handling packages, comprising one or more motorized roller conveyors, object of the present invention, and which is characterized by the following claims.

### BRIEF DESCRIPTION OF THE DRAWINGS

These and other features will be more apparent from the following description of certain embodiments illustrated by way of non-limiting example in the accompanying drawings.

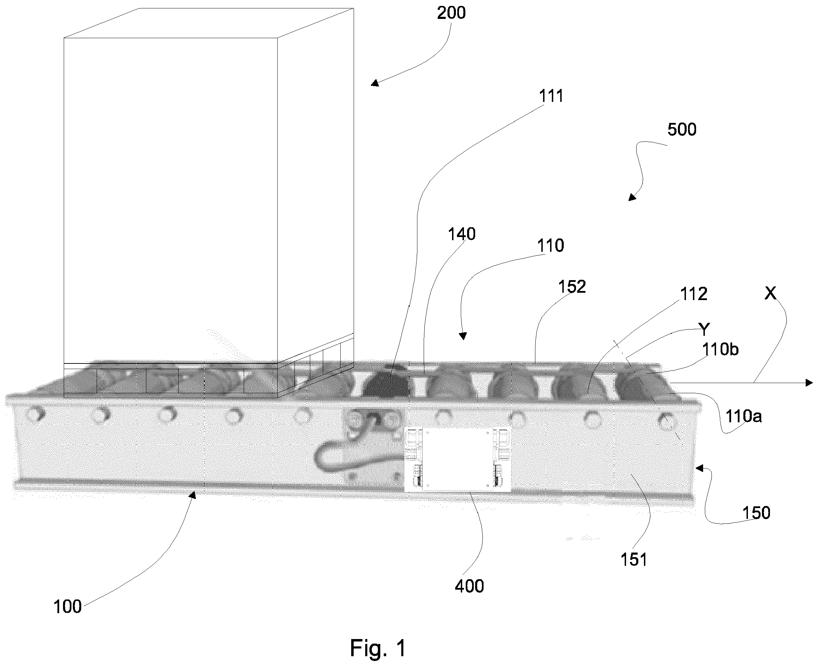

- Figure 1: illustrates an axonometric view of a roller conveyor according to the invention;

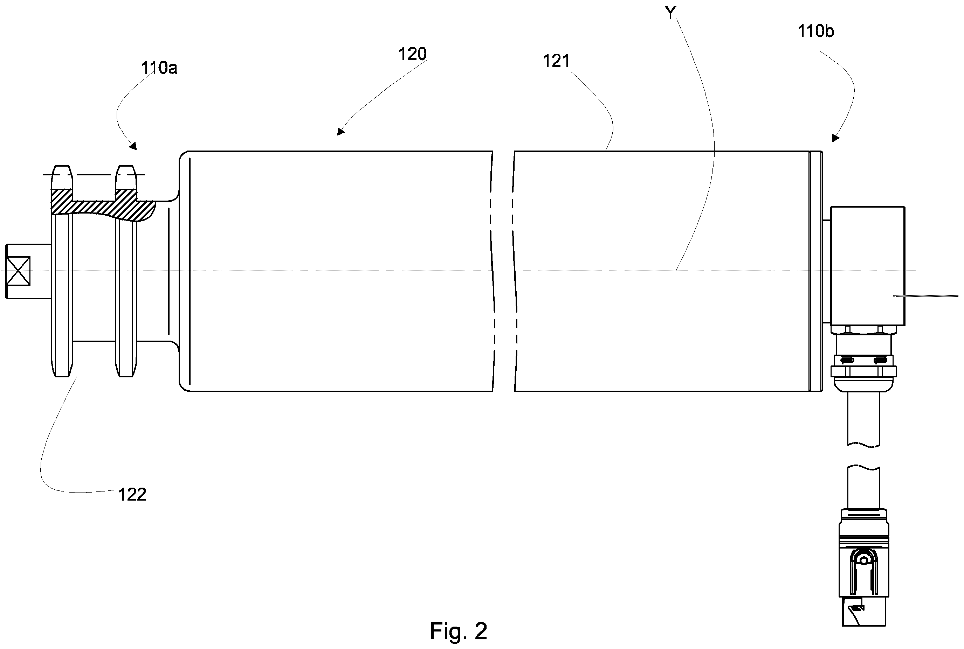

- Figure 2: illustrates a side view of a driving roller or motorized roller;

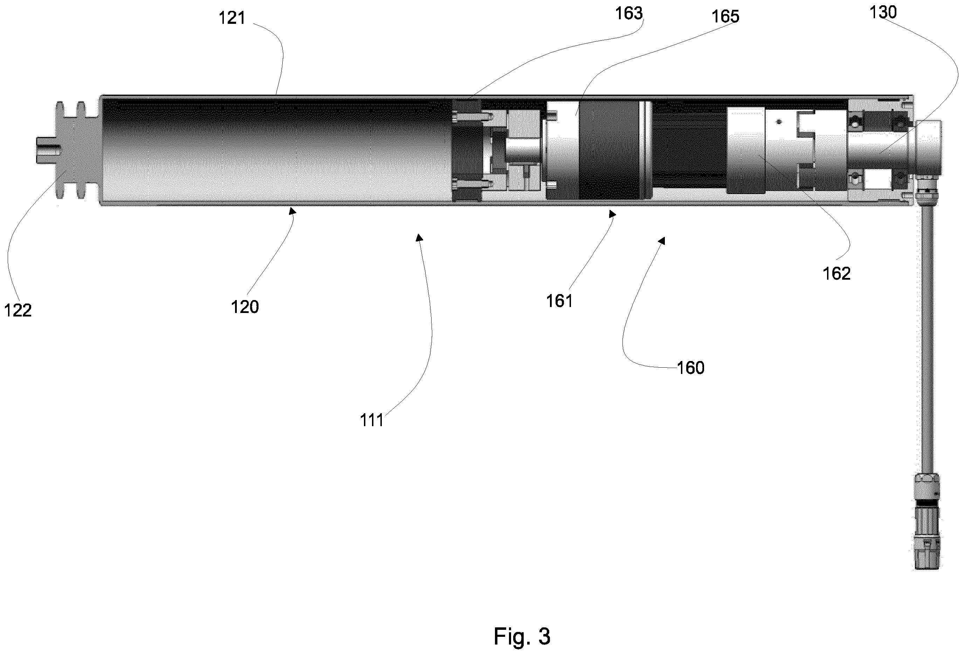

- Figure 3: illustrates a sectional view of a driving roller or motorized roller;
- Figure 4: illustrates three views of the management/power module;
- Figure 5: illustrates a connection example of a plurality of management/power modules.

### DESCRIPTION OF THE INVENTION

The figure shows a motorized roller conveyor 100 for handling/conveying packages 200, in particular pallets.

As is generally known, pallets have a high weight.

Said invention is particularly suitable for handling pallets of significant weight, preferably over 900 kg.

Said roller conveyors 100 are generally arranged in sequence to form a conveyor line which conveys packages 200 from an input position to an output position, for example to transfer packages between different machines in a production plant.

The roller conveyors 100 generally comprise a plurality of rollers 110 configured to support the package 200 and move it according to a translation direction X in a preferably horizontal plane.

The package 200 is therefore resting on more than one roller 110 of the conveyor 100.

Preferably said conveyor 100 comprises a driving roller 111 and a plurality of driven rollers 112.

In particular, said rollers 110, both driven 112 and driving 111, preferably have a cylindrical or truncated cone shape, extending along an axis of longitudinal symmetry Y.

Each roller 110 comprises a first end 110a and a second end 110b opposite said first end 110a.

Said roller 110 comprises a movable body 120 configured to rotate about its axis of symmetry Y.

Said movable body 120 comprises a shell 121 configured to make contact with the package 200 to be moved.

Said shell 121 has an elongated shape along the axis of symmetry Y and preferably a cylindrical shape.

Said shell 121 could also have a slightly truncated cone shape with an inclination such as to not affect the stability of the package 200.

The roller 110 further comprises a fixed body 130 and connected to support means 150.

In fact, said rollers 110 can be installed on support means 150 e.g., pairs of sides 151, 152 which are mechanically connected to the first end 110a and the second end 110b of said rollers 110, respectively.

The translation of the package 200 occurs by means of a thrust force which each roller 110 in contact with the package 200 exerts thereon. Said thrust force is a force tangent to the shell 121 and is exerted by the outer surface of the shell 121 and the resting package 200.

Said thrust force is generated by rotation of the movable body 120. Said rotation occurs by handling means 160.

A preferred embodiment provides that such handling means 160 comprises a motor assembly 161.

Said motor assembly 161 is preferably installed within the driving roller 111. Said type of driving roller 111 will also be called motorized roller 111.

In particular, by virtue of this solution, the handling means 160 are fully integrated in the driving roller 111.

This makes the solution compact and easy to clean and maintain.

Preferably, the motor assembly 161 comprises a fixed part integral 162 with the fixed body 130 of the driving roller 111 and a rotatable part 163 integral with the movable body 120 of the driving roller 111 to which it transmits rotation and torque.

Preferably the handling means 160 comprises the motor assembly 161 preferably in direct current.

Preferably the motor assembly 161 is of the brushless type.

In particular, the motor assembly 161 is powered at 48 volts.

Therefore, said motor assembly 161 is not supplied with alternating current, but direct current.

This reduces the electrical safety risks of the system.

A possible embodiment provides that the motor assembly 161 is configured to develop a torque capable of handling a package weighing at least 900 kg and preferably between 900 and 2000 kg.

In fact, said solution is particularly suitable for handling packages 200 such as full pallets.

In particular, the motor assembly 161 is configured to develop a power greater than 200 watts, preferably between 200 and 400 watts.

Said power is suitable for handling full pallets at a speed such as to ensure pallet stability and reduce slippage between pallets and rollers 110.

According to an aspect of the invention, the motor assembly 161 comprises a gearbox 165 preferably planetary.

The gearbox 165 can be coupled to the motor to increase the torque supplied, reducing the number of revolutions.

As is well known, brushless motors are capable of providing variable torques and speeds with the same power, but the torque developed is not always sufficient to move the applied load, and therefore the presence of the gearbox 165 can allow higher torques to be exerted without having to vary the motor size and therefore its power.

The planetary gearbox 165 is particularly advantageous because it allows high efficiency with respect to other types of gearboxes.

The best performance is crucial for applications in small spaces, such as inside a motorized roller 111.

By virtue of the use of the generally small brushless motor, it is possible to install the motor assembly 161 within the driving roller 111.

Said driving roller 111 preferably has a diameter between 80 and 120 mm, preferably 89 mm.

Preferably, the driven rollers 112 also have the same size and outer shape as the driving roller 111.

According to a preferred embodiment, the movable body 120 further comprises a transmission element 122 configured to cooperate with transmission means 140 adapted to mechanically and operationally connect the various rollers 110 comprising the roller conveyor 100, whether driven rollers 112 or driving rollers 111.

Preferably said transmission element 122 is placed at the first or second end 110a, 110b.

Preferably said transmission element 122 is a pinion or a pulley or a groove.

Said transmission element 122 cooperates with respective transmission means 140 such as chains or belts.

The transmission of motion from the driving roller 111 to the driven rollers 112 and between the various driven rollers 112 can be obtained in various manners, known to the person skilled in the art, e.g., chained rings or tangential chain.

The conveyor 100 can comprise detection means such as photocells, sensors, encoders.

Said detection means can detect the position of the package, or its speed or the speed of the conveyor 100. Depending on the detected data, they provide a signal for managing the conveyor and thus for the managing the movement of the package 200.

Said signal, as will be further explained below, acts on the motor assembly 161 to adapt the movement of the package 200 to the required handling specifications.

The object of the invention is a system 500, for handling packages 200, comprising one or more motorized roller conveyors 100.

A preferred embodiment provides that said roller conveyor 100 comprises a plurality of rollers 110 of which at least one driving roller 111.

Said driving roller 111 preferably comprises a movable body 120 configured to move said packages 200 by rotating about its axis of symmetry Y.

Said rotation preferably occurs by handling means 160 contained within said movable body 120, as described above.

Said system 500 can further comprise a switchgear for powering said conveyor 100.

Furthermore, preferably the system 500 comprises a control unit PLC for the management and control of the conveyor 100.

Such a control unit PLC is generally configured to manage and control a plurality of conveyors 100 forming a conveyor line which conveys packages 200 from an input position to an output position, e.g., to transfer packages 200 between different machines in a production plant.

According to an aspect of the invention, the system 500 comprises a management/power module 400.

Preferably, the motor assembly 161 is electrically powered by said management/power module 400.

Said power supply is preferably 48 volt direct current.

Said management/power module 400 is preferably located near the conveyor 100.

Preferably the management/power module 400 is installable on the roller conveyor 100.

A preferred embodiment depicted in the figure provides that it is positioned on support means 150 e.g., on the pairs of sides 151, 152 of said roller conveyor 100.

Thereby, the management/power module 400 is protected by the structure of the sides 151 itself, 152 from any drops of packages 200 during handling.

The fact that said management/power module 400 is positioned in the field, i.e., near the conveyor 100, makes it possible to considerably reduce the complexity of the wiring required to electrically power the motor assembly 161.

In fact, in such a case, the power/supply cables do not have to reach as far as the switchgear, which can also be located many metres away from the conveyor 100 and thus from its motor assembly 161.

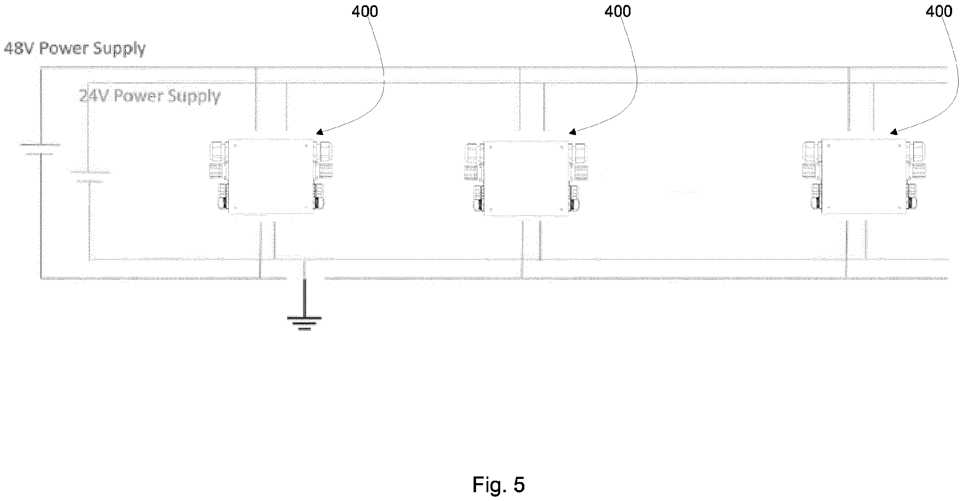

In particular, the power/supply cables connect a management/power module 400 with the adjacent one as depicted in figure 5.

Therefore, only one management/power module 400 is directly connected to the switchgear for the 48 Volt current for powering the motors and the 24 volt current for powering the signals.

Preferably, said management/power module 400 is configured to manage a plurality of conveyors 100, i.e., driving rollers 111 and therefore motor assemblies 161.

A preferred embodiment shown in the figure provides a management/power module 400 module capable of powering and handling two driving rollers 111.

This is a good compromise for managing the power supply of two motor assemblies 161 in the field, for example positioning said management/power module 400, at an intermediate distance between the two.

Preferably, the management/power module 400 is configured to manage the frequency converters of a plurality of driving rollers 111.

The frequency converter management allows to operate on the rotation speed of the motor assembly 161 and therefore the speed of the conveyor 100 and of the package 200 in transit.

The management of the frequency converter can allow to operate on the torque of the motor assembly 161 and thus on the driving force of the conveyor 100.

An embodiment provides that the management/power module 400 is configured to manage the frequency converters located within the switchgear.

By virtue of this solution, it is possible to keep the frequency converter within the switchgear with simplified wiring, preferably which passes the management/power module 400.

Keeping the converter in the switchgear instead of in the field, i.e., near the motor assembly 161, exposes it to less risk of breakage due to any falling packages 200.

An alternative embodiment provides that the management/power module 400 is configured to manage the frequency converters which are physically integrated in the same management/power module 400.

By virtue of this solution, it is possible to reduce the footprint within the switchgear, as the space normally occupied by frequency converters is recovered.

In particular, the wiring is also simplified in that the management/power module 400 is connected to the switchgear only for the 48 volt current for the motor supply and the 24 volt current for the signal supply.

A preferred embodiment provides that said management/power module 400 is configured to manage the frequency converters of two motor assemblies 161.

An embodiment depicted in the figure provides that said management/power module 400 is configured to manage/power a plurality of input and output signals.

Said input and output signals are preferably provided by the detection means of the conveyor 100 described above.

Said detection means of the conveyor 100 are preferably powered by the management/power module 400 in direct current at 24 volts.

In particular, the management/power module 400 is configured to manage input and output signals adapted to detect the position and/or speed of the package 200 being handled.

For example, the management/power module 400 is configured to manage signals from position sensors or from encoders for speed and position detection.

Said signal is transmitted by the management/power module 400 and then preferably to the control unit PLC.

Said input and output signals, depending on the detected data, provide information which is processed by the control unit PLC, which acts retroactively on the management of the motor assembly 161 of the conveyor 100.

Preferably as depicted in the figure, the management/power module 400 is configured to manage four input and four output signals connected to each motor assembly 161.

This number is a good compromise to reduce wiring complexity without the need for an expensive and complex management/power module 400.

In this case, the management/power module 400 is particularly suitable for managing two motorized conveyors 100.

If the number of conveyors 100 is greater than two, a preferred solution provides electrically connecting the management/power module 400 of one conveyor 100 or a pair of conveyors 100 with that of other conveyors 100.

An example is shown in figure 5 where three management/power modules 400 are connected to the 48 Volt current for powering the motors and to the 24 Volt current for powering the signals.

Preferably, said input and output signals are connected to said motor assembly 161 by means of a single communication line (field bus), constituting the means for distributing and collecting information.

By virtue of this solution, a simple wiring can be made with a reduced number of electrical connections and cables.

In fact, field buses are known to allow the various detection means to be connected together and manage the information provided.

In particular, said communication line (field bus) of the management/power module 400 can be of the profinet/io ethernet/ip ethercat type, etc., capable of interfacing with the control unit PLC.

Preferably, said management/power modules 400 are also connected to each other by means of the communication line (field bus).

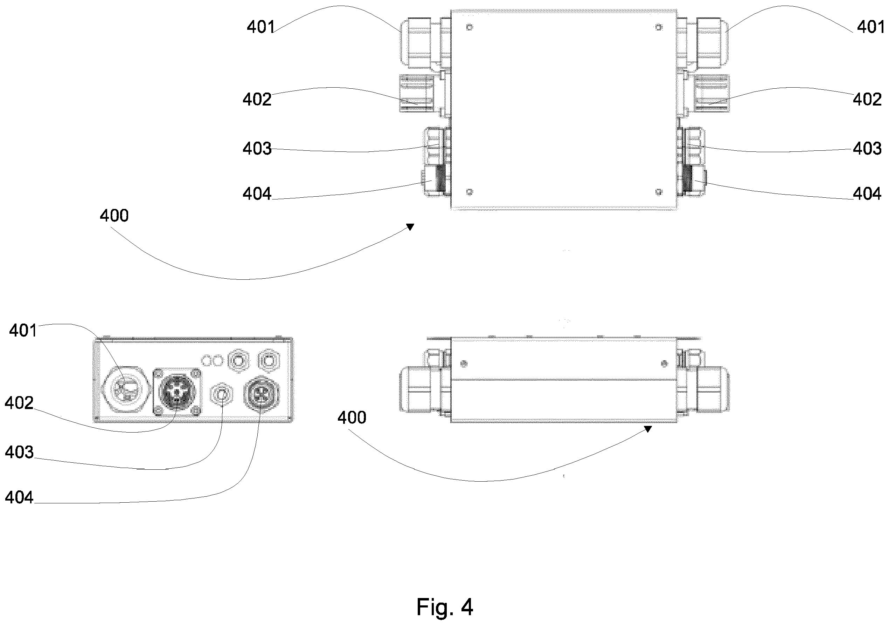

Figure 4 shows an example of a management/power module 400 which comprises two power supply connectors 401.

Preferably said management/power module 400 comprises two motor connectors 402 for the connection with the motor assemblies 161.

Preferably, said management/power module 400 comprises 6 signal connectors 403 for the connection with the detection means.

Preferably, said management/power module 400 comprises two line connectors 404 for the connection with the communication or field bus line.

It is understood, however, that said different types of connectors 401, 402, 403, 404, may be in different numbers depending on the conveyor line 100 to be managed.

Therefore, a system 500 which provides using a roller 111 with a motor assembly 161 integrated within the roller 111 and of the brushless motor type unit powered with direct current at 48 volts, in combination with the presence of a management/power module 400 in the possible configurations described above, makes it possible to obtain a conveyor 100 which is particularly simple to implement in terms of electrical wiring, easy to maintain and clean, as well as a safer solution as it is powered at low voltage and further a solution with reduced overall dimensions, but still capable of exerting a power compatible with heavy packages 200 such as pallets.

A further object of the invention is the driving roller 111 installable within a conveyor 100.

Preferably said driving roller 111 comprising a movable body 120 configured to move said packages 200 rotating about its axis of symmetry Y by handling means 160 contained within said movable body 120.

Preferably said handling means 160 comprise a direct current motor assembly 161 preferably of the brushless type, which is electrically powered at 48 Volts by said management/power module 400.

The management/power module 400 is preferably located near the conveyor 100.

Said management/power module 400 is further configured to manage/power a plurality of input and output signals connected to said motor assembly 161 by means of a single communication line (field bus), constituting the means for distributing and collecting information.

Preferably, the management/power module 400 is configured to manage the frequency converters of a plurality of driving rollers 111.

The frequency converter management allows to operate on the rotation speed of the motor assembly 161 and therefore the speed of the conveyor 100 and of the package 200 in transit.

In particular, said management/power module 400 is configured to preferably manage two frequency converters.

Preferably, said frequency converters are physically integrated in the same management/power module 400.

Optionally, said driving roller 111 is installable within a conveyor 100, which can be of the roller or chain type.

In the case of a chain conveyor, the driving roller 111 can be installed so that the transmission element 122 cooperates with the conveyor chains on which the packages rest.

It is understood however that what is described above has an illustrative and non-limiting purpose, therefore, possible variants of detail that may be necessary for technical and/or functional reasons, are considered from now falling within the same protective scope defined by the claims indicated below.

## Claims

1. System (500), for handling packages (200), comprising one or more motorized roller conveyors (100), a switchgear for powering said conveyor (100), a control unit (PLC) for management and control and a management/power module (400), **characterized in that** said roller conveyor (100) comprises a plurality of rollers (110) including at least one driving roller (111) comprising a movable body (120) configured to move said packages (200) rotating about its axis of symmetry (Y) by a handling means (160) contained within said movable body (120), wherein said handling means (160) comprise a direct current motor assembly (161) preferably of brushless type electrically powered at 48Volts by said management/power module (400), placed near the conveyor (100), and further configured to manage/power a plurality of input and output signals connected to said motor assembly (161) by means of a single communication line (field bus) constituting the means for distributing and collecting information.

2. System (500), according to claim 1, wherein the motor assembly (161) is configured to develop a torque capable of handling a package (200) weighing at least 900 kg and preferably between 900 and 2000 kg.

3. System (500), according to any one of the preceding claims, wherein the motor assembly (161) is configured to develop a power greater than 200 Watts, preferably between 200 and 400 Watts.

4. System (500) according to any one of the preceding claims, wherein the management/power module (400) is configured to manage a plurality of driving rollers (111), preferably two driving rollers (111).

5. System (500), according to any one of the preceding claims, wherein the management/power module (400) is configured to manage the frequency converters of a plurality of driving rollers (111), preferably two driving rollers (111), wherein said frequency converters are preferably positioned in the system's switchgear.

6. System (500), according to any one of the preceding claims, wherein the management/power module (400) is configured to manage the frequency converters of a plurality of driving rollers (111), preferably two driving rollers (111), wherein said frequency converters are physically integrated in the same management/power module (400).

7. System (500), according to any one of the preceding claims, wherein the management/power module (400) is configured to manage a plurality of input and output signals, preferably four, connected to each motor assembly (161).

8. System (500), according to any one of the preceding claims, wherein the management/power module (400) is configured to manage input and output signals adapted to detect the position and/or speed of the package (200) being handled.

9. System (500), according to any one of the preceding claims, wherein the management/power module (400) of one or more conveyors (100) is electrically connected to the management/power module (400) of other conveyors (100).

10. System (500), according to any one of the preceding claims, wherein the communication line (field bus) of the management/power module (400) is of the profinet/io ethernet/ip ethercat type to interface with the control unit (PLC).

11. System (500), according to any one of the preceding claims, wherein the management/power module (400) is installed on the roller conveyor (100) and preferably positioned on support means (150) e.g., pairs of sides (151, 152) of said roller conveyor (100).

12. System (500), according to any one of the preceding claims, wherein the motor assembly (161) comprises a gearbox (165), preferably planetary.

13. System (500), according to any one of the preceding claims, wherein the driving roller (111) has a diameter between 80 and 120 mm, preferably 89 mm.

14. Driving roller (111) installable within a conveyor (100), said driving roller (111) comprising a movable body (120) configured to move said packages (200) rotating about its axis of symmetry (Y) by handling means (160) contained within said movable body (120), wherein said handling means (160) comprise a direct current motor assembly (161) preferably of brushless type electrically powered at 48Volts by said management/power module (400), placed near the conveyor (100), and further configured to manage/power a plurality of input and output signals connected to said motor assembly (161) by means of a single communication line (field bus) constituting the means for distributing and collecting information.
